# EUROPÄISCHE PATENTANMELDUNG

(11) **EP 2 947 408 A1**
(43) Veröffentlichungstag der Anmeldung: **25.11.2015**
(21) Anmeldenummer: 15168867.8
(22) Anmeldetag: 22.05.2015
(51) Int. Cl.: F26B 25/00, D06F 58/24, F24F 13/22, F25D 21/14, H01H 35/18

(54) **VORRICHTUNG ZUM ABMESSEN DER EINFÜLLMENGE EINES FLUIDS IN EINEN BEHÄLTER**

(30) Priorität: 22.05.2014 CH 7812014
(71) Anmelder: Entfeuchter Center GmbH, 8953 Dietikon (CH)
(72) Erfinder: Scherer, Michael, 5430 Wettingen (CH)
(74) Vertreter: Spierenburg, Pieter

(57) **Zusammenfassung**

Vorrichtung zum Abmessen der Einfüllmenge eines Fluids in einem Behälter (27), wobei das Fluid von einem elektrisch betriebenen Gerät in den Behälter befördert wird. Die Vorrichtung (1) weist ein Traggestell (2) und einen Träger (7) für den Behälter auf, der von einer Feder am Traggestell abgestützt ist. Ein Druckschalter (15) ist unterhalb des Trägers (7) angeordnet, und eine elektrische Zuleitung (21) ist am Traggestell (2) vorgesehen ist, welche mit dem Druckschalter (15) elektrisch verbunden ist.

## Beschreibung

Die Erfindung betrifft eine Vorrichtung zum Abmessen der Einfüllmenge eines Fluids in einen Behälter nach dem Oberbegriff des Patentanspruchs 1.

Elektrisch betriebene Geräte, welche ein Fluid erzeugen, wie beispielsweise ein Wäschetrockner, Bautrockner oder dergleichen, haben einen Auffangbehälter für das Fluid, welcher von einer Bedienungsperson regelmässig überwacht und geleert werden muss, damit der Auffangbehälter nicht überläuft. Der professionelle Betrieb von Wäschetrockner oder Bautrockner ist somit fast ausschliesslich während den normalen Arbeitszeiten möglich, oder man organisiert einen Pikettdienst, damit die Geräte auch in der Nacht eingesetzt werden können.

Der vorliegenden Erfindung liegt nun die Aufgabe zugrunde, eine Vorrichtung anzugeben, welche den automatischen Betrieb eines solchen elektrisch betriebenen Geräts wie eines Wäschetrockners oder eines Bautrockners ermöglicht.

Diese Aufgabe wird durch eine Vorrichtung mit den Merkmalen des Patentanspruchs 1 gelöst.

Die Erfindung hat den Vorteil, dass nunmehr die Überwachung der Einfüllmenge eines Behälters für ein Fluid, welches von einem elektrisch betriebenen Gerät erzeugt wird, automatisch erfolgen kann, d.h. die Überwachung durch eine Bedienungsperson vollständig entfällt.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine erste Ausführung der Vorrichtung mit einem Traggestell und einem Träger in perspektivischer Darstellung,
- Fig. 2: ein Detail der Vorrichtung mit einer einstellbaren Druckfeder,
- Fig. 3: ein Detail der Rückseite des Traggestells mit einer Steckdose,
- Fig. 4: die erste Ausführung der Vorrichtung mit einem Wäsche- und Raumtrockner und einem Eimer zur Aufnahme von Kondenswasser, und
- Fig. 5: die erste Ausführung und eine zweite Ausführung der Vorrichtung.

In den Figuren sind für dieselben Elemente jeweils dieselben Bezugszeichen verwendet worden und erstmalige Erklärungen betreffen alle Figuren, wenn nicht ausdrücklich anders erwähnt.

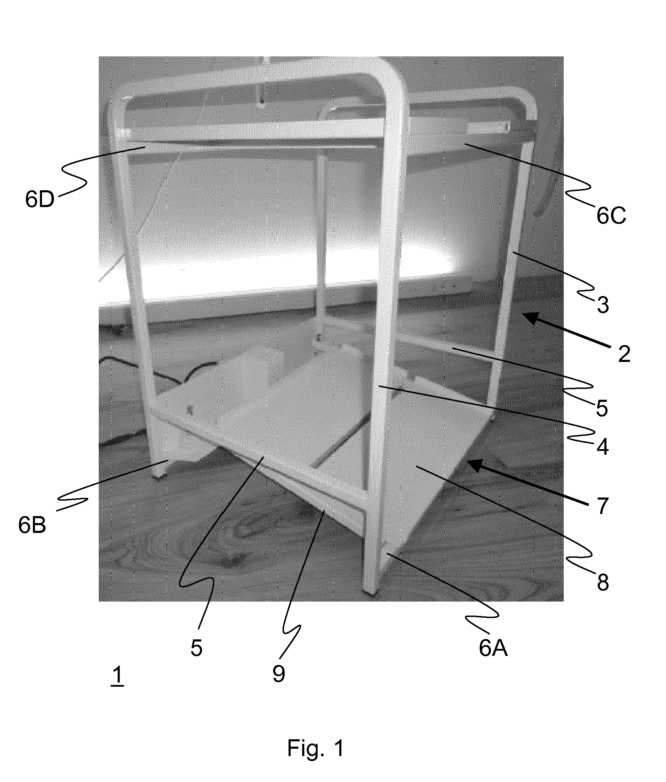

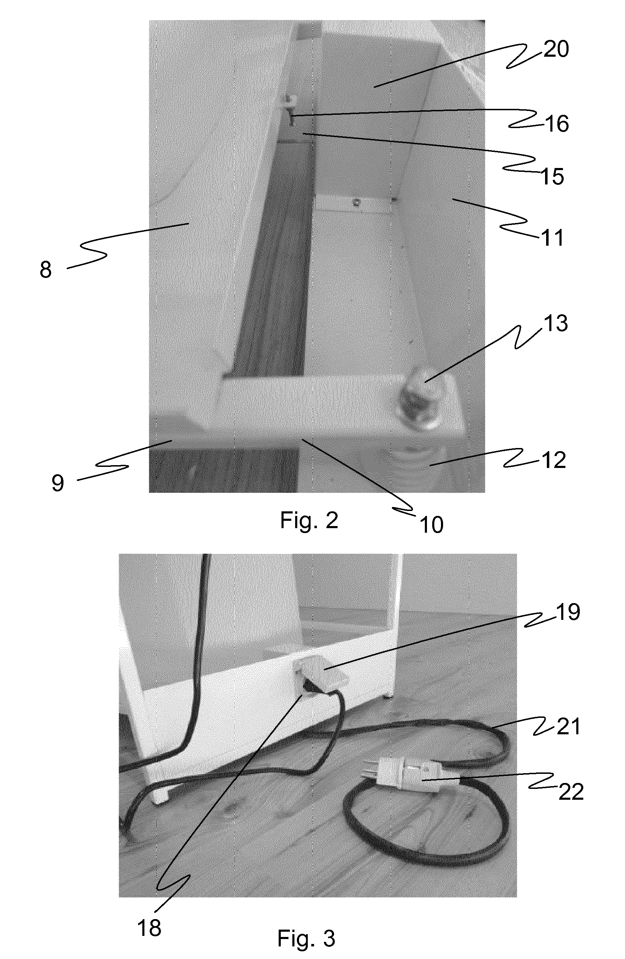

In der Figur 1 ist eine erste Ausführung der Vorrichtung 1 zum Abmessen der Einfüllmenge eines Fluids in einen Behälter gezeigt. Die Vorrichtung 1 besteht aus einem Traggestell 2, welches aus zwei U-förmigen Seitenteilen 3 und 4 mit Querstreben 5 besteht, die mittels Längsstreben 6A, 6B, 6C, 6D miteinander verbunden sind. Auf den unteren Längsstreben 6A und 6B ist ein plattenförmiger Träger 7 vorgesehen, welche an der vorderen unteren Längsstrebe 6A mittels eines - nicht-ersichtlichen - Scharniers befestigt ist. Wie aus Figur 2 ersichtlich besteht der Träger 7 aus einer Blechplatte 8, die an zwei seitlichen Holmen 9 befestigt ist. Die Holme 9 stehen auf der Rückseite der Platte 8 mit einem vorstehenden Ende 10 vor. Auf der Rückseite des Traggestells 2 ist unten eine L-förmige Blechplatte 11 an der hinteren unteren Längsstrebe 6B befestigt ist. Zwischen dem vorstehenden Ende 10 und der L-förmigen Blechplatte 11 ist auf beiden Seiten eine Druckfeder 12 vorgesehen, deren Federweg mittels einer Einstellschraube 13 eingestellt werden kann. Ferner ist mittig zwischen den beiden Holmen 9 und unterhalb der Blechplatte 8 ein Druckschalter 15 am Traggestell 2 befestigt, der von einem an der Blechplatte 8 befestigten Stift 16 betätigt werden kann.

In Figur 3 ist die Rückseite des Traggestells 2 mit einer Steckdose 18 und einem Klappdeckel 19 ersichtlich. Auf der Innenseite der L-förmigen Rückwand oder Blechplatte 11 ist ein spritzwassergeschützter Kasten 20 um der Steckdose 18 vorgesehen (siehe Figur 2). An der Steckdose 18 ist eine elektrische Zuleitung oder Kabel 21 mit einem Anschlussstecker 22 angeschlossen. Das Kabel 21 ist elektrisch mit dem Druckschalter 15 verbunden, so dass bei Betätigung des Druckschalters 15 durch den Stift 16 die Verbindung mit dem Stromnetz unterbrochen wird.

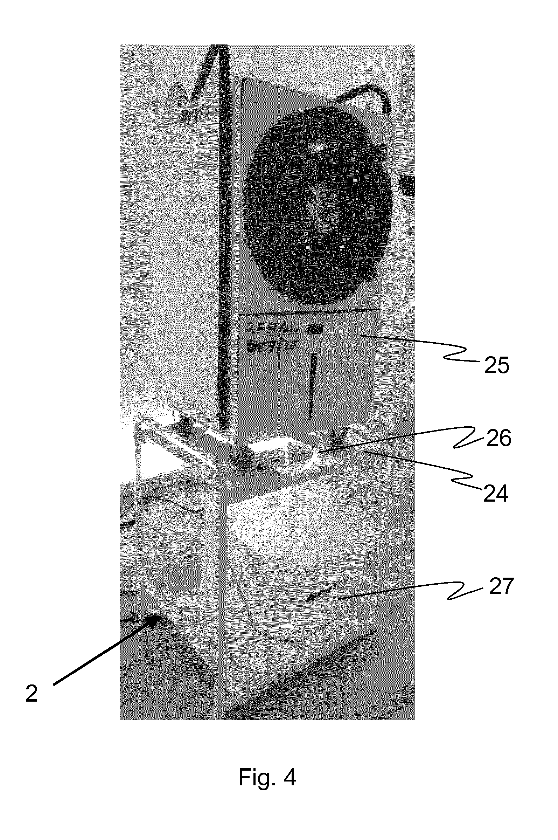

Figur 4 zeigt die Anwendung der ersten Ausführung der Vorrichtung 1, bei welcher auf einem oberen, als Platte ausgebildeten Träger 24 ein Wäsche- und Raumtrockner 25 aufgestellt ist, welcher über einen Schlauch 26 Kondenswasser in einen auf dem unteren Träger 7 aufgestellten Behälter oder Eimer 27 abführt.

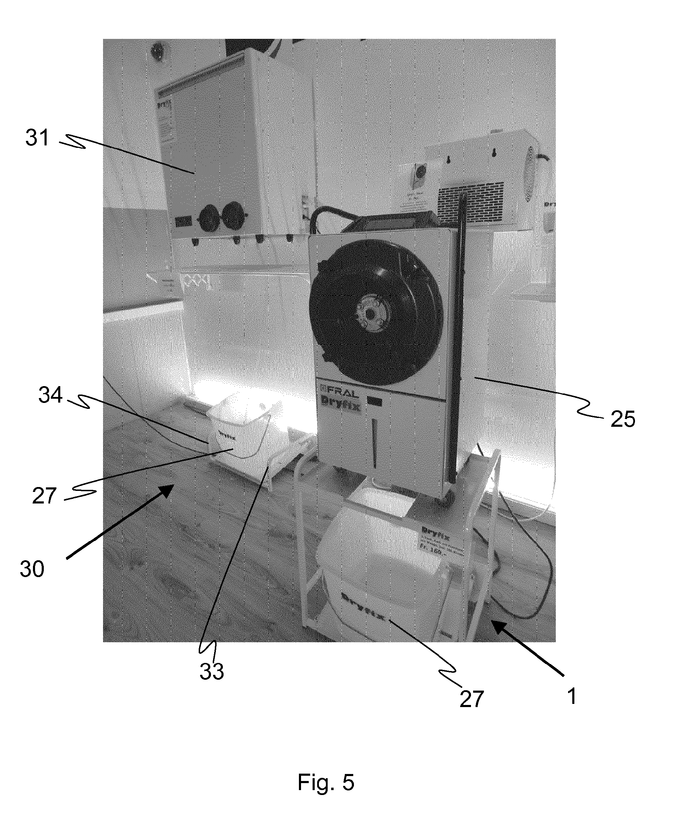

Figur 5 zeigt perspektivisch hinter der ersten Ausführung 1 der Vorrichtung eine zweite Ausführung 30 für eine an der Wand befestigte Wäsche- und Raumtrockner 31, bei welcher lediglich der untere Träger 7 vorgesehen ist und die U-förmigen Seitenteile 3 und 4 durch gebogene, L-förmige Rohre 33 und 34 ersetzt worden sind. Der Aufbau der zweiten Ausführung 30 mit den Druckfedern 12 und dem Druckschalter 15 ist gleich wie in der ersten Ausführung 1.

Die Funktionsweise der Vorrichtung 1 bzw. 30 ist relativ einfach: beim Füllen des Eimers 27 mit Kondenswasser werden die Druckfedern 12 allmählich zusammengedrückt, so dass der Träger 7 auf der Rückseite langsam nach unten schwenkt und beim Erreichen des maximalen Füllungsgrades wird der Druckschalter 15 durch den Stift 16 betätigt und somit der an der Steckdose 18 angeschlossene Wäsche- und Raumtrockner 25 abgestellt.

Anstelle einer Druckfeder 12 kann selbstverständlich auch eine Zugfeder zwischen dem Träger 7 und dem Traggestell 2 vorgesehen sein, wobei auch hier der Federweg mittels einer Einstellschraube eingestellt werden kann. Empirisch kann somit die gewünschte maximale Einfüllmenge im Eimer 27 bestimmt werden. Ferner kann ein akustisches Signal oder eine Signallampe vorgesehen sein, welche angibt, dass der Wäsche- und Raumtrockner 25 abgestellt wurde und der Eimer 25 die eingestellte Einfüllmenge erreicht hat.

Der Träger 7 kann auch mittels seitlichen Führungen auf- und abbewegbar gelagert sein und eine oder mehrere Druckfeder gleichmässig bezüglich des Trägers 7 angeordnet sein, so dass der Träger 7 lediglich vertikal durch den sich füllenden Behälter oder Eimer 27 nach unten gedrückt wird.

Es versteht sich ferner, dass die vorliegende Erfindung auch für andere Anwendungen als Wäsche- und Raumtrockner geeignet ist, bei welchem ein Fluid in einen Behälter eingefüllt wird. Beispielsweise kann die Vorrichtung auch bei einem elektrisch betriebenen Nasssauger oder bei einer elektrischen Tauchpumpe eingesetzt werden.

## Patentansprüche

1. Vorrichtung zum Abmessen der Einfüllmenge eines Fluids in einem Behälter (27), wobei das Fluid von einem elektrisch betriebenen Gerät in den Behälter befördert wird, **dadurch gekennzeichnet, dass** die Vorrichtung (1, 30) ein Traggestell (2) und einen Träger (7) für den Behälter aufweist, der von mindestens einer Feder am Traggestell abgestützt ist, und ein Druckschalter (15) unterhalb des Trägers (7) angeordnet ist, und eine elektrische Zuleitung (21) am Traggestell (2) vorgesehen ist, welche mit dem Druckschalter (15) elektrisch verbunden ist.

2. Vorrichtung nach Anspruch 1, **dadurch gekennzeichnet, dass** die Feder eine Druckfeder (12) ist, welche unterhalb des Trägers (7) angeordnet ist.

3. Vorrichtung nach Anspruch 1, **dadurch gekennzeichnet, dass** die Feder eine Zugfeder ist, welche zwischen dem Träger (7) und dem Traggestell (2) angeordnet ist.

4. Vorrichtung nach einem der Ansprüche 1 bis 3, **dadurch gekennzeichnet, dass** der Träger (7) einseitig mittels eines Scharniers am Traggestell (2) schwenkbar angeordnet ist.

5. Vorrichtung nach einem der Ansprüche 1 bis 4, **dadurch gekennzeichnet, dass** die elektrische Zuleitung (21) mit einem Anschlussstecker (22) versehen und an einer am Traggestell (2) angeordneten Steckdose (18) angeschlossen ist.

6. Vorrichtung nach einem der Ansprüche 1 bis 5, **dadurch gekennzeichnet, dass** die Federkraft der Feder (12) mittels einer Einstellschraube (13) einstellbar ist.

7. Vorrichtung nach einem der Ansprüche 1 bis 6, **dadurch gekennzeichnet, dass** das Traggestell (2) einen Träger (24) für das elektrisch betriebene Gerät aufweist.

8. Vorrichtung nach Anspruch 7, **dadurch gekennzeichnet, dass** der Träger (24) für das elektrisch betriebene Gerät oberhalb des Trägers (7) für den Behälter angeordnet ist.

9. Vorrichtung nach Anspruch 5 bis 8, **dadurch gekennzeichnet, dass** die Steckdose (18) von einem spritzwassergeschützten Kasten (20) umgeben ist und einen Klappdeckel (19) aufweist.
